**Europäisches Patentamt**

**European Patent Office**

**Office européen des brevets**

(19)

(11) Numéro de publication : **0 021 935**
**B1**

(12) # FASCICULE DE BREVET EUROPÉEN

(45) Date de publication du fascicule du brevet :
05.10.83

(51) Int. Cl.³ : **B 60 K 31/00**

(21) Numéro de dépôt : 80400823.3

(22) Date de dépôt : 06.06.80

(54) **Régulateur d'allure pour véhicule automobile.**

(30) Priorité : 29.06.79 FR 7916879

(43) Date de publication de la demande :
07.01.81 Bulletin 81/01

(45) Mention de la délivrance du brevet :
05.10.83 Bulletin 83/40

(84) Etats contractants désignés :
**DE GB IT SE**

(56) Documents cités :
**DE A 2 330 939**
**FR A 2 431 935**
**GB A 1 437 083**
**GB A 2 009 463**
**US A 3 570 622**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Allard, Pierre Yves**
**25, rue du Commandant Nismes**
**F-92500 Ruell (FR)**
Inventeur : **Leconte, Gilles**
**98, avenue Denfert-Rochereau**
**F-75014 Paris (FR)**

(74) Mandataire : **Jacques, Max et al**
**RNUR - S. 0804 BP 103**
**F-92109 Boulogne-Billancourt (FR)**

EP 0 021 935 B1

Jouve, 18, rue St-Denis, 75001 Paris, France

Régulateur d'allure pour véhicule automobile

La présente invention est relative à des perfectionnements concernant un régulateur d'allure pour un véhicule automobile.

Le brevet US 3 570 622 décrit un régulateur d'allure comprenant des moyens d'actionnement mécanique du papillon et des moyens électroniques pour mesurer la vitesse du véhicule et mémoriser la tension correspondant à la vitesse au moyen d'un compteur. Des moyens sont également prévus pour que les moyens d'actionnement mécanique ajustent la position du papillon afin de maintenir la vitesse du véhicule à la valeur désirée, pour rendre inactif le régulateur d'allure lorsque la pédale de frein est enfoncée, pour enclencher à nouveau le régulateur d'allure lorsqu'on le désire, et pour accroître ou décroître la vitesse souhaitée. Dans l'agencement conforme à ce brevet, une liaison mécanique classique entre le papillon et la pédale d'accélérateur est conservée.

Par ailleurs, la demande de brevet français n° 2 431 935 déposée par la demanderesse le 27 juillet 1978 et publiée le 22-02-80 décrit un régulateur d'allure pour un véhicule automobile se distinguant de ce brevet US 3 570 622 par les points suivants :

— dans le dispositif d'aide à la conduite permettant la régulation et la limitation d'allure d'un véhicule, toute liaison mécanique entre la pédale d'accélération et le papillon des gaz du carburateur est supprimée ;

— les mouvements d'ouverture et de fermeture du papillon des gaz du carburateur sont commandés par un moteur recevant ses ordres d'un potentiomètre dont les déplacements sont solidaires de ceux de la pédale d'accélérateur par l'intermédiaire d'un calculateur électronique relié, par ailleurs, à une commande séquentielle de sélection de la vitesse de consigne, à un dispositif d'affichage de ladite vitesse de consigne, à un capteur de vitesse ou de régime moteur et à la boîte de vitesses pour connaître le rapport engagé ;

— à la pédale d'accélérateur est associé un point dur qui correspond à une modification du ressort de compression formant un moyen de rappel et contre l'action duquel le conducteur du véhicule doit agir quand il enfonce ladite pédale : le point dur est fixé, par exemple, aux 2/3 de la course totale de la pédale et le moyen de rappel comprend un ressort de compression qui est prétaré, par exemple, à 4 kg pour les deux premiers tiers de la course de la pédale tandis qu'il est prétaré, par exemple, à 15 kg pour le troisième tiers. On fait correspondre le point dur à la vitesse de consigne présélectionnée à laquelle on désire voir rouler le véhicule et à laquelle correspond un régime moteur N* si l'on se trouve sur les rapports les plus longs de la boîte de vitesse, dans le cas où le régime moteur est donné par la position de la pédale d'accélérateur ;

— suivant une variante, les déplacements de la pédale d'accélérateur sont gradués en vitesse et le point dur correspond à la vitesse de consigne présélectionnée V*.

En résumé, la demande de brevet français précité concerne un régulateur d'allure pouvant servir d'aide à la conduite pour un véhicule automobile à moteur à combustion interne, du type comportant des moyens de rappel enfonçables pour s'opposer avec une force limitée et au moins égale à une valeur prédéterminée à l'effort d'enfoncement du conducteur agissant sur la pédale d'accélérateur dès que cette dernière de par sa position dépasse une valeur prédéterminée, un capteur de vitesse, un calculateur électronique associé à des moyens de sélection d'une vitesse de consigne et à des moyens d'affichage de ladite vitesse de consigne présélectionnée, un potentiomètre de recopie dont la partie mobile est solidaire de la pédale d'accélérateur et dont la sortie est reliée au calculateur électronique dont les sorties sont reliées à un moteur électrique qui commande les déplacements angulaires du papillon, dans lequel l'effort d'enfoncement de la pédale d'accélérateur correspond à une première valeur sur une longueur déterminée de la course de la pédale d'accélérateur et à une seconde valeur supérieure à la première sur le restant de la course de ladite pédale d'accélérateur faisant apparaître un point dur fixe en un point déterminé de la course de la pédale d'accélérateur correspondant au passage d'un premier effort d'enfoncement à un second effort d'enfoncement supérieur au premier, dans lequel les déplacements de la pédale d'accélérateur sont gradués en vitesse.

La présente invention concerne des modifications apportées au régulateur du type précité, modifications qui consistent en ce que, comme connu en soi, le régulateur comprend une liaison mécanique entre ladite pédale d'accélérateur et ledit papillon, ladite liaison mécanique incorporant un bloc de régulation qui est commandé par le calculateur électronique et regroupe un train épicycloïdal commandé par le moteur électrique, le potentiomètre de recopie et une palette tourillonnant autour de l'axe de symétrie dudit train épicycloïdal.

Suivant une caractéristique, ledit bloc de régulation comporte en outre un électro-aimant de blocage de la pédale d'accélérateur dans la position correspondant au point dur.

Suivant une autre caractéristique, ledit point dur correspond à une vitesse présélectionnée par le conducteur à partir de ses commandes de sélection constituant une vitesse de butée.

D'autres avantages ressortiront de la description qui suit et qui n'est donné qu'à titre d'exemple. A cet effet, on se reportera aux dessins joints dans lesquels :

— la figure 1 illustre, sous forme de schéma-bloc, un mode de réalisation de régulateur d'allure suivant la présente invention ;

— la figure 2 illustre, sous forme schématique, un mode de réalisation de la liaison mécanique entre la pédale d'accélération et la papillon des gaz suivant la présente invention ;

— la figure 3 illustre, en section par un plan passant par son axe de symétrie longitudinale, un mode de réalisation du servo-mécanisme suivant la présente invention ;

— la figure 4 illustre, en section par un plan de trace IV-IV à la figure 3, le servo-mécanisme précédent ;

— la figure 5 illustre les chemins des câbles intervenant dans la liaison mécanique de la figure 2 ;

— la figure 6 définit plusieurs courbes et plusieurs domaines du plan permettant de préciser le fonctionnement de la liaison mécanique suivant la présente invention ;

— les figures 7 et 8 illustrent un mode de réalisation détaillé des circuits électroniques du régulateur d'allure de la figure 1 ;

— la figure 9 illustre des courbes explicatives du fonctionnement du régulateur suivant l'invention.

Les mêmes références désignent les mêmes éléments sur les différentes figures.

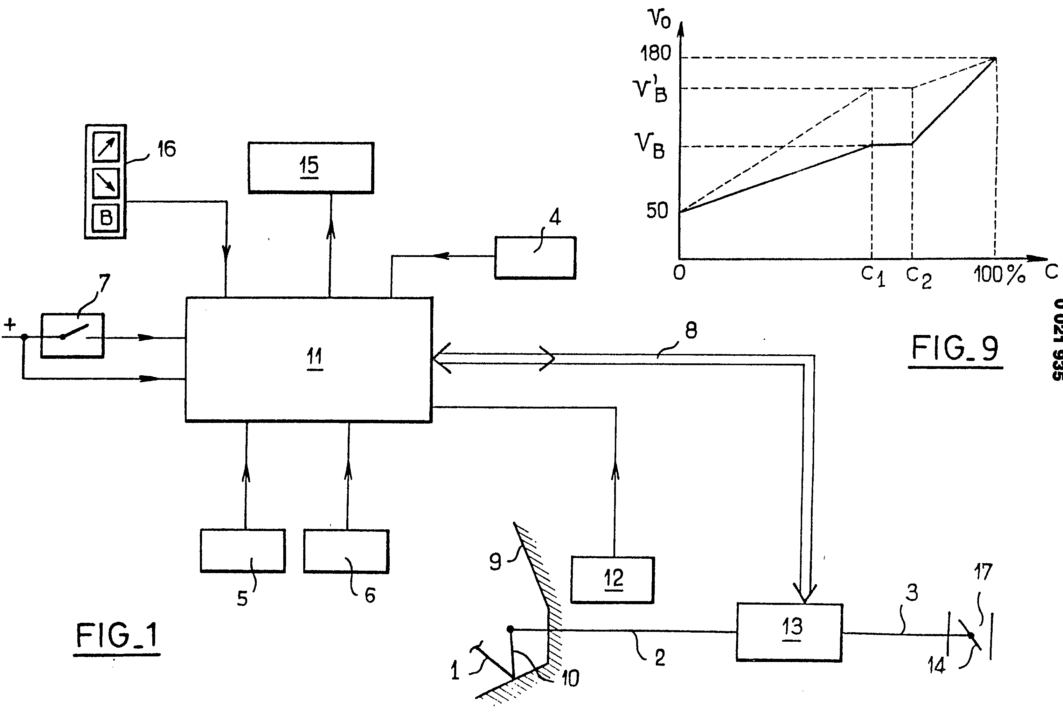

Suivant le mode de réalisation illustré à la figure 1, la pédale d'accélération 1 d'un véhicule automobile est reliée à une biellette de manœuvre du papillon des gaz 14 située dans la tubulure d'admission d'air 17 par l'intermédiaire de la succession des éléments suivants : un levier coudé 10 traversant le tablier 9 de la voiture pour se raccorder à une première extrémité d'un câble d'accélérateur 2 connecté par sa seconde extrémité à un bloc de régulation 13, relié lui-même par sa sortie à une première extrémité d'un câble de papillon 3 connecté par sa seconde extrémité à la biellette de manœuvre du papillon des gaz 14. Le bloc de régulation 13 comporte notamment : un servo-moteur permettant d'agir sur la longueur mécanique de la liaison entre la pédale d'accélérateur 1 et le papillon des gaz 14, un potentiomètre réglable asservi à la position de la pédale d'accélérateur dans sa course, un dispositif de blocage par électro-aimant et un détecteur de brin mou permettant de détecter tout relâchement dans la tension du câble de papillon. Ledit bloc de régulation 13 est relié par une liaison électrique 8 comportant plusieurs conducteurs en parallèle assurant les connexions électriques nécessaires dans les deux sens de transmission avec un calculateur central 11 qui peut être un microcalculateur INTEL du type 8022 comportant un convertisseur analogique-numérique intégré.

Ce calculateur 11 est, par ailleurs, connecté par des entrées à un interrupteur de marche-arrêt 7 relié à son extrémité opposée au « plus après-contact » du véhicule, des commandes de sélection 16 disposées à proximité immédiate des doigts du conducteur, par exemple sur une branche du volant et comprenant : une commande d'accélération, une commande de décélération et une commande de blocage : ces commandes utilisent des interrupteurs fugitifs. Le calculateur 11 est encore connecté par des entrées à : un poste « plus lanternes » 4, un capteur de freinage 5, un contacteur de débrayage 6 et un capteur tachymétrique 12 monté, par exemple, en sortie de boîte de façon à connaître à chaque instant la vitesse réelle du véhicule. Enfin, le calculateur 11 est connecté par des sorties à un poste d'affichage 15 disposé sur le tableau de bord permettant de visualiser la vitesse présélectionnée pour le point dur de la pédale d'accélérateur situé, par exemple, aux 2/3 de la course de cette dernière et correspondant à une modification de l'effort d'enfoncement de celle-là.

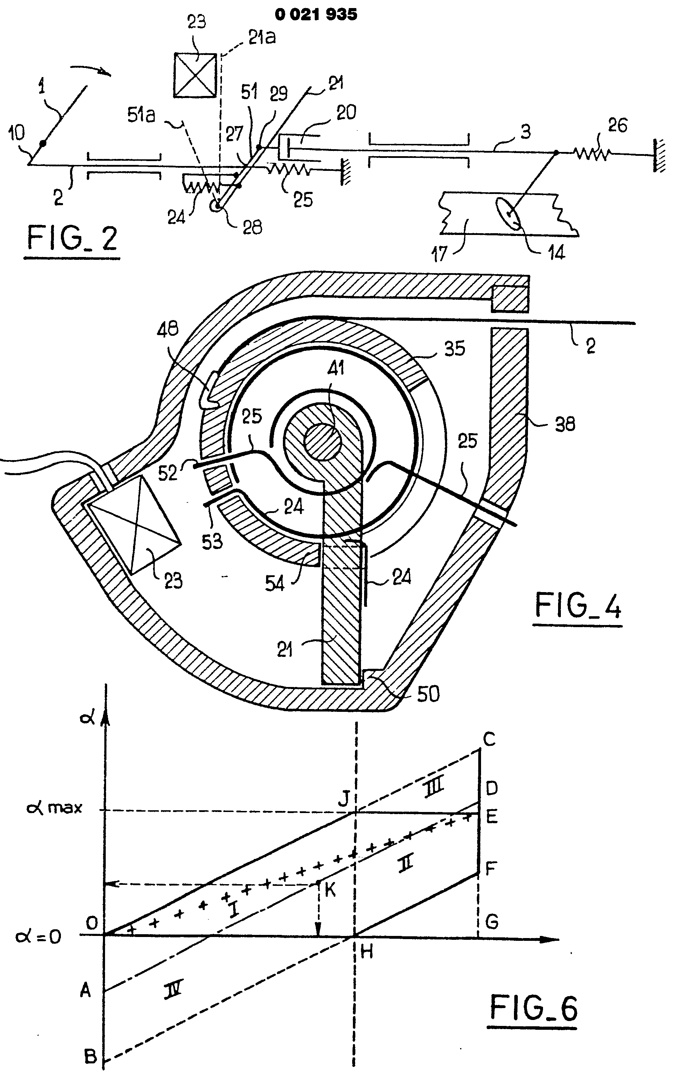

La figure 2 illustre, sous forme schématique, un mode de réalisation de la liaison mécanique entre la pédale d'accélération 1 et le papillon des gaz 14. On reconnaît à la figure 2 le levier coudé 10 ainsi que les câbles d'accélérateur 2 et de papillon 3. Le câble d'accélérateur 2, à son extrémité opposée à la pédale d'accélérateur 1, est relié en un point 27 d'un levier 51 pouvant pivoter autour d'un axe 28. Le câble 2 est maintenu en position tendue au moyen d'un ressort 25 de rappel de la pédale d'accélérateur 1 en position de repos. Un servo-moteur 20, représenté sous la forme d'un vérin, est connecté par une de ses composantes au point 29 du levier 51 tandis que sa seconde composante est reliée à une extrémité du câble 3 du papillon. Parallèlement au levier 51, on a représenté à la figure 2, une palette 21 susceptible de pivoter également autour de l'axe 28. On a représenté la palette 21 en pointillé en position 21a au contact d'un électro-aimant 23, le levier 51 pouvant alors se trouver dans la position 51a en pointillé dans une position totalement distincte de celle de la palette en 21a. La palette 21 est en matière magnétique. Un ressort de butée 24 est représenté attaché par ses extrémités respectivement à la palette 21 et au levier 51. Ce ressort de butée 24 a donc tendance à maintenir la palette 21 et le levier 51 au contact l'un de l'autre au cours de leurs rotations autour de l'axe 28. Mais une fois que la palette 21 est venue en butée en 21a au contact de l'électro-aimant 23, si le conducteur continue à enfoncer la pédale d'accélération 1, il peut continuer à faire tourner le levier 51 seul, à condition de vaincre l'effort antagoniste développé par le ressort de butée 24. On a représenté en 26 un ressort de rappel du papillon 14 en position de fermeture.

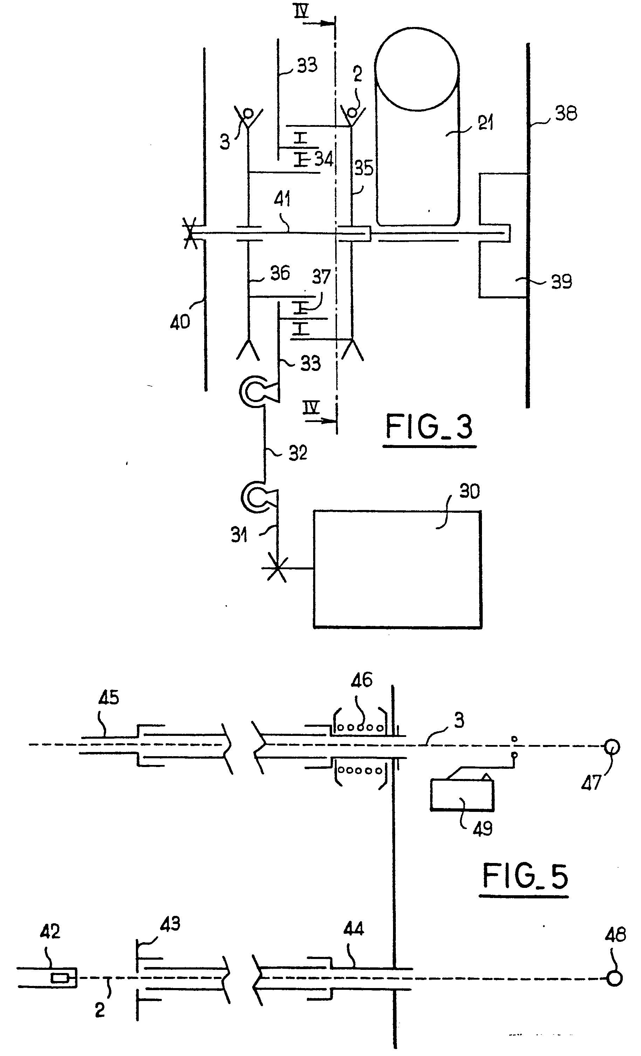

La figure 3 illustre en section par un plan passant par son axe de symétrie longitudinal 41 le servo-moteur 20 de la figure 2 sous la forme d'un train épicycloïdal et la figure 4 illustre en section ledit train épicycloïdal par un plan de trace IV-IV à la figure 3 en regardant dans le sens des flèches. On voit, à la figure 3 en 36, la poulie papillon sur laquelle s'enroule le câble 3 connecté au papillon des gaz 14 et en 35 la poulie accélérateur sur laquelle s'enroule le câble 2 raccordé à la pédale d'accélérateur 1. Parallèlement à ces poulies 35 et 36, est disposé un plateau 33 portant des satellites dont deux sont représentés en section en 34 et 37 à la figure 3. La réalisation pratique comporte trois satellites. Le plateau porte-satellites 33 est entraîné en rotation par un motoréducteur 30 par l'intermédiaire d'un maneton moteur 31 et d'une biellette 32. Le motoréducteur 30 fonctionne sous la commande du microcalculateur 11 de la figure 1. La poulie accélérateur 35 est solidaire dans ses rotations autour de l'axe 41 de symétrie du train épicycloïdal de la palette 21 et d'un potentiomètre réglable 39 qui est asservi à la course de la pédale d'accélérateur 1 et qui fournit, par conséquent, une tension de sortie traduisant, à chaque instant, la position de ladite pédale d'accélérateur 1. La partie fixe du potentiomètre réglable 39 est portée par un support 38 tandis que l'axe de symétrie 41 du train épicycloïdal tourillonne à sa seconde extrémité dans un support plat 40 parallèle au support 38. La figure 4 précise certains détails de réalisation. On y reconnaît l'électro-aimant 23, la palette 21 tourillonnant autour de l'axe 41 avec sa butée de repos 50 ménagée à l'intérieur du boîtier 38 renfermant le train épicycloïdal, le câble 2 traversant le boîtier 38 et qui est rattaché en 48 sur la poulie 35 d'accélérateur susceptible de tourner autour de l'axe 41. On voit en 54 la butée située sur la poulie d'accélérateur 35 pour la palette 21. On voit aussi la position du ressort 25 de rappel de la pédale d'accélérateur traversant à une extrémité le boîtier 38 puis la poulie d'accélérateur 35, contournant l'axe 41 pour finir en 52 encastrée dans la poulie papillon 36 ainsi que la position du ressort 24 de butée formant ressort de palette 21 à une de ses extrémités, tournant à l'intérieur des poulies d'accélérateur 35 et de papillon 36 pour se terminer en 53 encastrée dans la poulie papillon 36.

Suivant un mode de réalisation préféré, la poulie d'accélérateur 35 comporte une denture intérieure qui entraîne, par l'intermédiaire des satellites 34, 37, la poulie de papillon 36 munie d'une denture extérieure et qui entraîne à son tour le câble papillon 3. Le rapport des défilements des câbles d'accélérateur 2 et de papillon 3 est déterminé par le rapport des rayons des dentures intérieure et extérieure ainsi que par le rapport des rayons des poulies correspondantes. Les satellites 34, 37 sont disposés angulairement par le porte-satellites 33 portant les axes des satellites sur lesquels tourillonnent ces derniers. La position angulaire du porte-satellites 33 est contrôlée par l'intermédiaire de rotules et de la bielle 32 par le motoréducteur 30 et son maneton 31 commandés électriquement par le bloc de régulation de la figure 1. Le débattement angulaire du porte-satellites 33 est limité angulairement par deux butées disposées sur le bâti 38. La position du porte-satellites 33 contrôle le déphasage du défilement relatif du câble d'accélérateur 2 par rapport au câble de papillon 3.

La figure 5 illustre la position respective des câbles d'accélérateur 2 et de papillon 3 dans leurs gaines respectives et les principaux éléments qui les accompagnent. Sur le câble d'accélérateur 2, on remarque successivement de gauche à droite : une chape d'accrochage 42 sur le pédalier d'accélérateur, une butée de gaine fixe 43 pour le passage du tablier de la voiture, une butée de gaine réglable 44 et l'extrémité 48 que l'on retrouve en 2 sur la poulie accélérateur 35 de la figure 3. Sur le câble de papillon 3, on remarque successivement de gauche à droite : une entrée 45 de gaine réglable sur patte de papillon ; une butée 46 avec ressort compensateur : ce ressort a une course d'environ 25 mm et correspond à un effort supérieur ou égal à celui correspondant à l'ouverture maximale du papillon, enfin un détecteur de brin mou 49 et l'extrémité 47 que l'on retrouve en 3 sur la poulie papillon 36 de la figure 3. Les accrochages sur les poulies 35 et 36 s'effectuent par exemple par « TELURIT » (marque déposée).

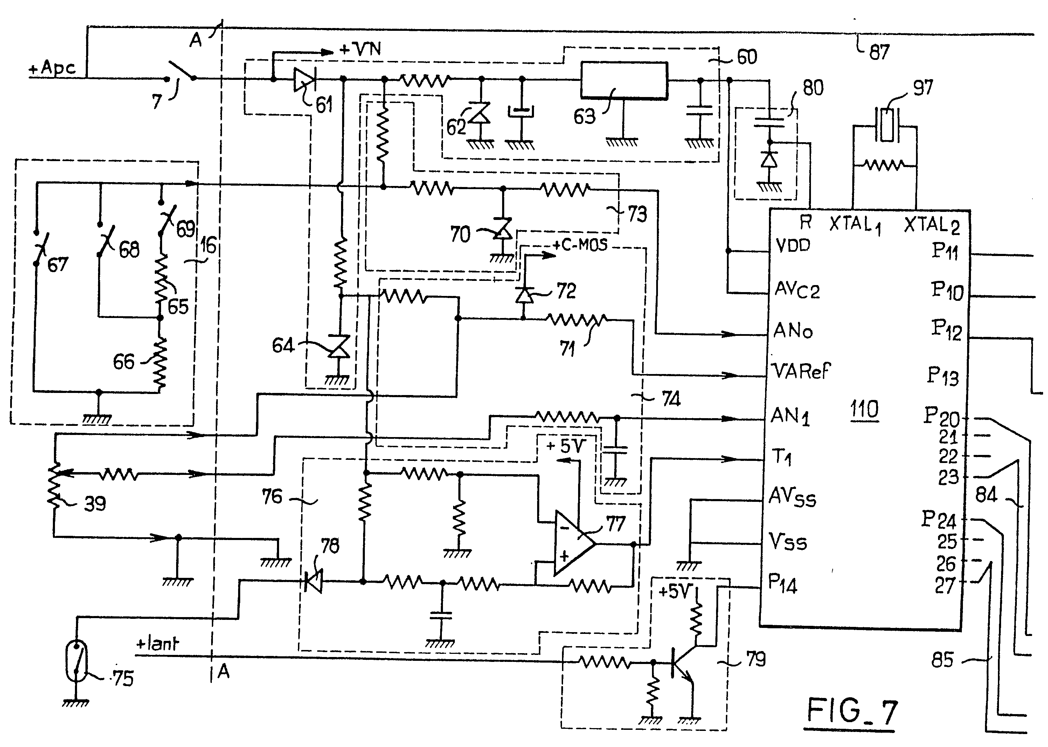

La figure 6 représente dans un plan dans lequel on a fait figurer en abscisses la longueur de la liaison totale entre la pédale d'accélération 1 et le papillon des gaz 14 et en ordonnées l'angle d'ouverture $\alpha$ du papillon des gaz 14 entre zéro et son ouverture maximale, plusieurs courbes délimitant plusieurs domaines du plan permettant de préciser le fonctionnement de la liaison mécanique suivant l'invention. La loi de variation représentée par la droite OE figurée par des croix correspond à une voiture de série ; la loi de variation représentée par la droite OJC correspond à une voiture équipée du « NORMALUR » (marque déposée) avec le système hors service ; la loi de variation représentée successivement par les droites OH et HF correspond à une voiture équipée du système suivant l'invention en fonctionnement, mais avec le servo-mécanisme 20 en position de pleine fermeture, la loi avec le servo-mécanisme 20 en position de pleine ouverture correspondant alors à la droite OJC, la loi de variation représentée par la droite AD correspondant à une position intermédiaire du servo-mécanisme 20. On voit donc que, en fonction de la position de la pédale 1 et de l'ouverture de servo-moteur 20, le point de fonctionnement courant K peut se situer dans quatre zones distinctes à savoir :

— zone I correspondant au triangle OHJ,
— zone II correspondant au trapèze HJEF,
— zone III correspondant au triangle JEC,
— zone IV correspondant au triangle BOH.

Pour la zone I, il existe une ouverture fixe possible du papillon des gaz 14, de même pour la zone II où seule la dureté de la pédale est en cause.

Pour la zone III, l'ouverture théorique est supérieure à l'ouverture maximale du papillon, ce qui nécessite un ressort compensateur entre le servo-moteur 20 et le papillon 14. La commande de rétro de boîte est faite par ce ressort compensateur qui est illustré en 46 à la figure 5.

Pour la zone IV, comme le papillon 14 est déjà fermé, le câble de commande 3 du papillon 14 est détendu. Un contact détectant ce brin mou, illustré en 49 à la figure 5 permet, sans ouvrir le papillon, de remettre le servo-moteur sur une loi supprimant ce brin mou, à la limite sur la loi de variation représentée par la droite OH. Après un relevé de pied, le système se trouve alors en condition pour que l'ouverture du papillon des gaz se produise dès l'attaque de la pédale 1 sans temps mort.

En ce qui concerne la loi d'effort sur la pédale, on conserve donc à peu près la même loi dans les deux premiers tiers de la course en rajoutant un effort supplémentaire à partir de ce point du fait de l'existence du ressort 24 de butée qui a été illustré aux figures 2 et 3.

Dans un mode de réalisation précis, le porte-satellites 33 de la figure 3 tourne entre deux butées distantes de 34 degrés par rapport au bâti 40. La palette 21, elle, tourne de 35° environ par rapport à la poulie accélérateur 35 entre deux butées. La palette 21 tourne aussi de 56 degrés et 40 minutes par rapport au bâti 38 pour rencontrer l'électro-aimant 23 formant butée. Il existe un ressort 25 entre la poulie accélérateur 35 et le bâti 38 et un autre ressort 24 entre la poulie accélérateur 35 et la palette 21 comme indiqué précédemment.

La solution préférée fait donc appel à un train épicycloïdal illustré à la figure 3 qui donne le rapport de multiplication et, par action du moto-réducteur 30 sur le porte-satellites 33, le déphasage de la commande papillon, on a :

$$W_P = 1,5\, W_a + 2,5\, W_m$$

si $W_P$ est la vitesse angulaire de rotation de la poulie papillon 36,

$W_a$ est la vitesse angulaire de rotation de la poulie accélérateur 35,

$W_m$ est la vitesse angulaire de rotation du moteur 30.

Les câbles d'accélérateur 2 et de papillon 3 attaquent des poulies respectives 35 et 36 de diamètre identique. La poulie d'accélérateur 35 entraîne le potentiomètre 39 et, par l'intermédiaire du ressort 24, la palette 21 qui, pour la pédale 1 enfoncée aux 2/3, subit l'influence de l'électro-aimant 23 de la figure 2 avec possibilité de blocage de l'ensemble et durcit la loi d'effort du conducteur sur la pédale 1 pour le tiers de course restant.

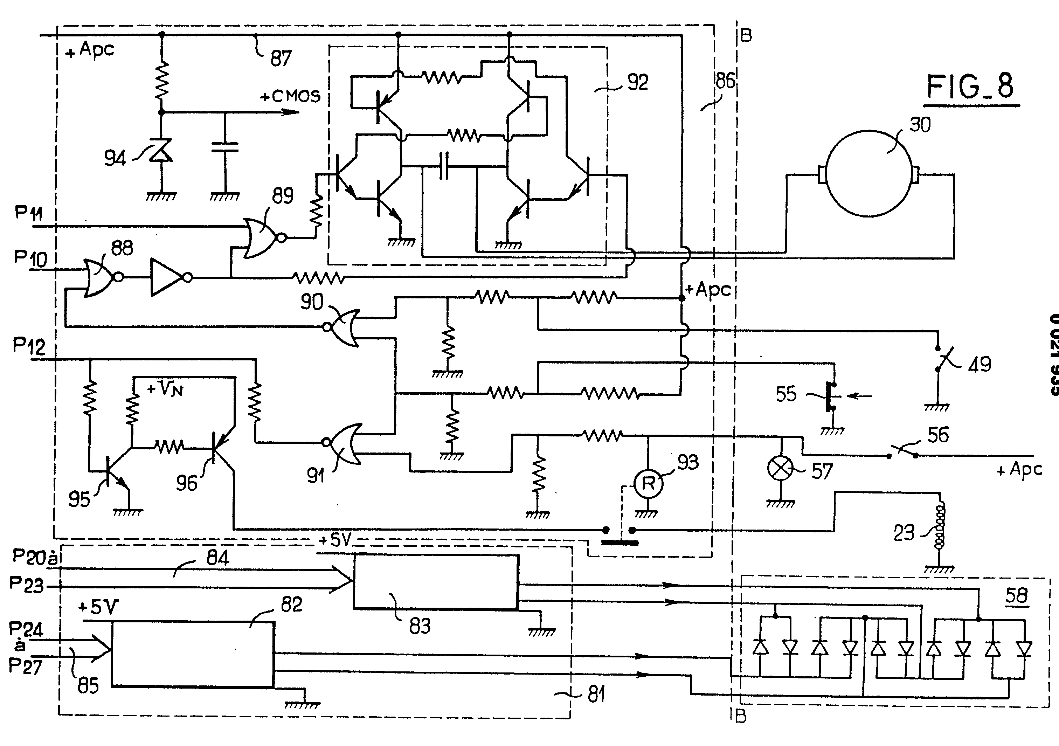

On passe à présent à la partie électronique de l'invention à l'aide des figures 7 et 8. En considérant l'ensemble des figures 7 et 8 et en les mettant côte à côte, on peut voir que la partie électronique de l'installation comprend trois parties essentielles. La partie située sur la figure 7 à la gauche de la ligne verticale AA en pointillé regroupe les commandes d'entrée utilisant des contacts fugitifs à faible course. La partie située sur la figure 8 à la droite de la ligne verticale BB en pointillé regroupe les organes commandés tels que : le moto-réducteur 30, le détecteur de brin mou 49, un interrupteur de débrayage 55, un interrupteur de frein 56 connecté par une de ses bornes au « plus après-contact » et sur lequel est reliée à la masse une lampe de stop 57, l'électro-aimant de blocage 23 et un dispositif d'affichage à diodes électroluminescentes 58. La partie centrale des figures 7 et 8 comprises entre les lignes verticales en pointillé AA et BB peut constituer une platine de servitude 11 rassemblant l'ensemble des composants électroniques nécessaires à l'élaboration des différents signaux de commande et comprenant, comme élément central, le calculateur électronique 110 réalisé, comme on l'a déjà dit, à partir d'un microcalculateur INTEL de type 8022 intégrant un convertisseur analogique-numérique. Le microcalculateur comprend 64 octets de RAM et 2 048 octets de ROM, une base de temps interne ou compteur d'événements et une horloge avec son oscillateur. Ce circuit peut exécuter plus de 70 instructions.

En haut et à gauche de la figure 7, on retrouve l'interrupteur 7 de marche-arrêt déjà mentionné à propos de la figure 1 et qui est relié par une borne au « plus après-contact » du véhicule et par sa seconde borne à l'entrée d'un circuit d'alimentation 60 comprenant entre autres éléments, une diode de protection 61 en série véhiculant l'alimentation du calculateur 110, une diode de protection 62 aux surtensions, un régulateur 63 de tension cinq volts ainsi qu'une référence de tension dix volts réalisée au moyen d'une diode Zener 64 qui sert à obtenir la référence de tension du convertisseur analogique-numérique intégré dans le microcalculateur 110 ainsi que pour le circuit de mise en forme du signal tachymétrique.

Au-dessous de l'interrupteur 7 de marche-arrêt de la figure 7, on trouve le circuit 16 de commandes externes de sélection de vitesses ou de blocage dans lequel la commutation de deux résistances 65 et 66 au moyen des interrupteurs 67, 68 et 69 permet de sélectionner quatre plages de tension sur l'entrée $AN_0$ du convertisseur analogique-numérique intégré au calculateur 110. Une diode Zener 70 de 4,7 volts permet de limiter la tension si aucune des commandes n'est choisie. Au-dessous du circuit 16 de commandes externes, on trouve le potentiomètre 39 de la figure 3 donnant une tension correspondant à la position de la pédale d'accélération. Ce potentiomètre est, par exemple, du type rotatif linéaire de quatre kilo-ohms fourni par la firme américaine « The BENDIX Corp ». Pour obtenir, à partir de la référence de dix volts fournie par la diode Zener 64, la référence de tension VA, référence du convertisseur analogique-numérique intégré dans le microcalculateur 110, on a réalisé un diviseur de tension comportant notamment une résistance 71 en série avec la résistance 39 du potentiomètre fournissant une tension correspondant à la position de la pédale d'accélération. Une diode 72, reliée à une tension d'alimentation permanente « plus CMOS » par l'intermédiaire de circuits logiques du bloc commande du moteur, permet de réaliser une protection simple contre les surtensions. La diode 64 de régulation joue un rôle analogue.

Le circuit compris à l'intérieur du pointillé 73 à la figure 7 constitue le circuit de mise en forme des signaux de sélection de vitesse et de blocage émis à partir du circuit 16 tandis que le circuit compris à l'intérieur du pointillé 74 à la figure 7 constitue le circuit de mise en forme du signal correspondant à la position de la pédale d'accélération et émis à partir du potentiomètre 39.

Un relais REED 75 figure le capteur de vitesse 12 de la figure 1. Il est suivi d'un circuit de mise en forme 76 compris à l'intérieur d'une ligne pointillée à la figure 7 et qui est obtenu par un circuit trigger utilisant notamment un amplificateur opérationnel 77. A l'entrée de ce circuit de mise en forme 76, on remarque une diode 78 permettant la séparation des différents utilisateurs, si plusieurs utilisent simultanément le même capteur 75.

Un circuit d'interface « plus lanternes » 79 permet d'adapter la tension « plus lanternes » à un niveau compatible avec celui du microcalculateur 110. On a encore fait figurer à la figure 7 une interface 80 de remise à zéro du microcalculateur 110 connectée par sa sortie à l'entrée R de ce dernier.

Passant à la figure 8, une interface d'affichage 81 comprend deux circuits 82 et 83 à trois états référencés 74125 dans le catalogue de NATIONAL SEMICONDUCTOR et permettant de commander une diode parmi douze à l'intérieur du circuit 58. Par exemple, le circuit trois états 83 est relié par quatre conducteurs en parallèle 84 aux sorties $P_{20}$ à $P_{23}$ du microcalculateur 110, tandis que le circuit trois états 82 est relié, d'une manière analogue, par quatre conducteurs en parallèle 85 aux sorties $P_{24}$ à $P_{27}$ du microcalculateur 110. A la place des circuits trois états 82 et 83, on pourrait tout aussi bien utiliser d'autres circuits équivalents, par exemple des circuits adaptateurs Canal N et Canal P associés à un réseau de résistances pour limiter le courant, ces circuits portant les références 74C907 et 74C906 au catalogue de NATIONAL SEMICONDUCTOR.

Le circuit de commande du moteur 30 et des systèmes de blocage 49, 55, 56 et 23 est compris à l'intérieur de la ligne pointillée 86. Il est alimenté à la tension « plus après-contact » par le conducteur 87 figurant également à la partie supérieure de la fig. 7.

Des portes logiques CMOS référencées 88, 89, 90, 91 et présentées sous la référence 74C02 au catalogue de NATIONAL SEMICONDUCTOR, permettent :
— de ne pas commander en même temps les deux branches d'un même côté du pont 92 commandant le moteur 30 ;
— de commander le moteur 30 dans le sens ouverture du papillon des gaz 14 si on a une commande à la masse de brin mou 49 à condition que l'on ne débraye pas ;
— d'inhiber la commande de blocage 23 si on freine en 56 ou si on débraye en 55.

Un relais de sécurité 93 permet de couper la liaison de commande de l'électro-aimant 23, si l'on freine, au cas où les transistors de commande de l'électro-aimant de blocage 23 seraient court-circuités. La diode 94 en haut et à gauche du circuit de commande 86 permet, comme la diode 64, de réaliser un antiparasitage par rapport aux parasites venant du compartiment moteur pour protéger le microcalculateur 110 ainsi qu'une alimentation simple des circuits CMOS.

Le microcalculateur 110 délivre sur son entrée-sortie $P_{12}$ raccordée à la sortie de la porte 91 figure 8 une commande de blocage qui est active à un niveau haut et qui peut être forcée de l'extérieur à un niveau bas dans le cas de freinage ou de débrayage. Dans cette dernière hypothèse, l'électro-aimant 23 est désexcité par l'intermédiaire des transistors de commande 95 et 96 et, en même temps, le niveau bas est reconnu par le microcalculateur 110 qui se repositionne lui-même en situation non bloquée.

Un quartz 97 travaillant à la fréquence de 3 MHz est connecté entre les pattes $XTAL_1$ et $XTAL_2$ du microcalculateur 110. Il permet à son horloge interne à la sortie du présélecteur d'impulsions (prescaler) de délivrer une impulsion toutes les 320 µs qui incrémente le compteur interne utilisé en compteur de temps. Toutes les seize impulsions, c'est-à-dire toutes les 5,12 ms, on engendre une interruption. Cette interruption à son tour incrémente un registre temps qui est remis à zéro, quand il a atteint la valeur 130. Ceci permet de déterminer un cycle machine de :

$$130 \times 5,12 = 665 \text{ ms}$$

Le programme principal est réinitialisé toutes les 665 ms. Il comporte :

a) La mesure de la vitesse faite sur un nombre entier de tours tachymétriques au maximum sur 400 ms (registre temps = 78), à raison de huit impulsions par tour ; la vitesse minimale mesurée est de 36 km/h.

b) La présélection de la vitesse de butée $V_B$ à la suite de la première mesure de vitesse. Il y a calage de la vitesse de butée à la vitesse réelle arrondie à la décade supérieure, si $V_2$, vitesse réelle du véhicule à l'instant donné, est supérieure ou égale à 90 km/h, sinon $V_B = 90$ km/h avec $V_B$ max = 150 km/h.

c) L'autorisation de blocage si la pédale d'accélération est en position de butée, correspondant au point dur : course pédale Co > 60 % et si la vitesse réelle $V_2$ du véhicule est supérieure à $0,75 V_B - 10$ km avec un minimum de 50 km/h.

d) Le recalibrage automatique du potentiomètre 39, si l'on est bloqué ou que l'on accélère ou décélère à une valeur $C_3$ pour $C_1$ mise en mémoire précédemment lors d'une période bloquée à vitesse stabilisée correspondant au calcul de X = 0 explicité ci-après.

e) La modification de la vitesse de butée, si l'on est en blocage et que l'on accélère ou décélère manuellement, auquel cas on a :

$$V_B = V_0 = V_2 \pm 10 \text{ km}$$

avec $V_B$ max = 150 km/h et $V_B$ min = 55 km/h
$V_0$ est la vitesse de régulation
$V_2$ est la vitesse réelle du véhicule.

f) Le calcul de la vitesse de régulation $V_0$ fonction de $V_B$ et de la course de la pédale $C_0$ (256 pas de définition) avec au départ :
$C_1 = 65$ % de la course totale
ou $C_3$ après un recalibrage
et $C_2 = C_1 + 5$ %

si $C_0 < C_1$ on a $V_0 = (V_B - 50) \cdot C_0/C_1 + 50$ km/h
si $C_1 \leqslant C_0 \leqslant C_2$ on a $V_0 = V_B$
si $C_0 > C_2$ on a $V_0 = (180 - V_B)/(255 - C_2) \cdot (C_0 - C_2) + V_B$

g) Le calcul de la fonction de régulation :

$$X = 1/2 \cdot [V_2 - V_0 + 3(V_2 - V_1) + C] \qquad (1)$$

avec $V_2$ : vitesse réelle à l'instant donné
$V_1$ : vitesse réelle au cycle précédent
$V_0$ : vitesse de régulation
C : coefficient prenant la valeur 4 si la quantité $(V_2 - V_1)$ est supérieure ou égale à un pendant au moins quatre mesures successives, ce qui correspond à une accélération supérieure à 0,4 m/s².

Au sujet de ce calcul et sur la manière de l'exécuter, on pourra consulter la demande de brevet FR-A-2 409 385 déposée le 16 novembre 1977 par la demanderesse pour « procédé de régulation de vitesse d'un moteur à combustion interne et système limiteur en faisant application ».

h) La réalisation de butées fictives, si $|X| \geqslant 8$, auquel cas on on donne deux commandes à 665 ms d'intervalle à la valeur 8, puis six commandes à la valeur 4, puis $n$ commandes à la valeur 3 tant que persiste $|X| \geqslant 8$ et que le signe de X n'a pas été modifié.

i) Le début de la commande du moteur 30 sur les sorties $P_{10}$ et $P_{11}$ du microcalculateur 110 dès la fin des calculs, si X est différent de zéro et le calcul du temps TEM de fin de commande du moteur 30 en fonction d'une loi mise en mémoire. A chaque pas de calcul correspond un temps de commande.

j) L'affichage de la vitesse de butée $V_B$ : dans le cas d'une accélération ou d'une décélération manuelle en cours de blocage, la vitesse affichée est la vitesse réelle du véhicule $V_2$. L'affichage se fait par décades à ± 5 km près.

k) Le recalage automatique de $V_B$ à la décade affichée à la fin d'un blocage : le programme d'interruption piloté par le compteur interne a lieu toutes les 5,12 ms. Il comporte :

— L'étude des commandes externes provenant du circuit 16 : sélection de la vitesse de butée et commande de blocage sur l'entrée $AN_0$ du microcalculateur 110 avec antiparasitage interne du logiciel :
deux mesures successives sur huit chiffres binaires (bits) de définition doivent être identiques à ± une unité près.

Dans le cas de la pédale non bloquée, la commande de sélection de vitesse permet une commande séquentielle de sélection de la vitesse de butée de 10 en 10 km entre 60 et 150 km/h.

Dans le cas de la pédale bloquée, la commande de sélection de vitesse permet une accélération ou une décélération manuelle contrôlée.

— Le forcing de la commande moteur pendant $n$ interruptions Timer générées par le compteur interne, si l'on a une nouvelle commande de sélection de vitesse ou une nouvelle accélération ou décélération (n = 6 donc 30 ms) ainsi qu'une modification appropriée de l'affichage 58.

— La reconnaissance, si l'on était préalablement bloqué, d'un déblocage de l'électro-aimant 23 par l'entrée $P_{12}$ du microcalculateur 110 à la suite d'un coup de frein ou d'un débrayage.

— Le déblocage de l'électro-aimant 23 si le programme principal ne fournit plus d'autorisation de blocage.

— Le blocage ou le déblocage au cas où l'on a une commande externe de blocage, les conditions précédentes étant remplies.

— L'étude de la position de la pédale $C_0$ sur l'entrée analogique $AN_1$ du microcalculateur 110 avec antiparasitage interne du logiciel sur deux mesures successives de huit chiffres binaires.

— La modification du rapport cyclique de commande de l'affichage à diodes électroluminescentes 58 à partir des sorties $P_{20}$ à $P_{27}$, si l'on a un niveau haut sur la patte $P_{14}$ du microcalculateur 110 reliée à la tension « plus lanternes ».

— L'incrémentation du registre « temps », avec un maximum de 130 et la commande du moteur 30 si le temps est égal à TEM donné par le programme principal ainsi que la commande d'une impulsion inverse de freinage du moteur après TEM, d'environ 2 ms en arrêtant le programme et en se servant du compteur interne.

A la fin de ce sous-programme d'interruption, le microcalculateur 110 retourne au programme principal, là où il avait été interrompu. Les programmes : scrutation des commandes externes, forcing de la commande du moteur 30, commande de blocage et de déblocage alternent avec les programmes : scrutation de la position de la pédale et modification de l'affichage 58, si on a un « plus lanterne » en $P_{14}$, et ce, toutes les 10,24 ms, afin de diminuer le temps d'interruption.

Le régulateur d'allure suivant la présente invention, en série sur le câble d'accélérateur, vient donc s'insérer dans la liaison pédale 1 — papillon des gaz 14 pour modifier la longueur de cette dernière en fonction d'une vitesse de régulation choisie par le conducteur.

La pédale d'accélérateur possède un point dur situé aux 2/3 de sa course correspondant à une modification de l'effort d'enfoncement de celle-ci. La pédale d'accélération est graduée en vitesse avec 256 pas de définition. Au point dur correspond la vitesse présélectionnée par le conducteur au moyen de sa commande séquentielle 16 de 10 en 10 km/h entre 60 et 150 km/h. L'affichage 58 par diodes électroluminescentes sur le compteur de vitesse permet de visualiser cette vitesse présélectionnée pour le point dur. A toute position de la pédale correspond une vitesse de régulation entre 50 km/h pied levé et 180 km/h pied à fond.

Le conducteur a la possibilité de bloquer sa pédale en position « point dur » grâce à l'électro-aimant 23 pour rouler à la vitesse présélectionnée. Dans ce cas, les commandes de sélection de vitesse 16 permettent une accélération ou une décélaration contrôlée. Dans le cas d'une boîte de vitesses mécanique, le blocage est supprimé si le conducteur vient à freiner ou à débrayer.

Le calculateur 110 donne des ordres au moteur électrique 30 pour modifier la longueur de la liaison série pédale d'accélérateur 1 — papillon des gaz 14. Le calculateur commande l'électro-aimant 23 de blocage de la pédale. Le contacteur 49 dit de « brin mou » à l'intérieur du bloc de régulateur 13 permet de garder toujours sous tension la liaison pédale 1 — papillon des gaz 14.

Dans le cas d'une boîte de vitesses automatique, l'interrupteur de rétro-contact (kick-down) se trouve placé entre le bloc de régulation 13 et le papillon des gaz 14.

On explicite à présent le fonctionnement du régulateur suivant l'invention à l'aide de la figure 9 représentant plusieurs courbes reliant la vitesse de régulation $V_0$ en km/h à la course de la pédale C exprimée en % de sa course totale. Comme on l'a dit précédemment, la pédale d'accélérateur est graduée en vitesses entre 50 et 180 km/h. Le point dur ou butée correspond à une vitesse $V_B$ sélectionnée par le conducteur. Le point dur est situé à $C_1$ % de la course. Une plage morte de $C_1$ % à $C_2$ % est constituée au-delà du point dur. On prend par exemple : $C_1 = 65$ % et $C_2 = 70$ %.

A toute position de la pédale d'accélérateur correspond une vitesse $V_0$ de régulation, fonction de la vitesse $V_B$ dite de butée, présélectionnée grâce à la commande séquentielle 16 de la figure 1 de 10 en 10 km entre 60 et 150 km/h à l'aide d'interrupteurs fugitifs.

Un antiparasitage logique est réalisé au niveau des commandes de façon à éviter les rebondissements. Toute commande pour être acceptée doit rester à un niveau donné pendant au moins 20 ms.

Dans le cas du blocage de la pédale en position de butée ou de point dur, deux interrupteurs de la commande de sélection de vitesse 16 permettent alors de commander une accélération ou une décélération contrôlée en prenant $V_0 = V_2 \pm 10$ km. A la fin de cette accélération ou de cette décélération, il y a tangentement pour $V_0$ à $V_3 \pm 3$ km si $V_3$ est la vitesse du véhicule à la fin de l'accélération ou de la décélération.

Un troisième interrupteur fugitif de la commande 16 permet de bloquer ou de débloquer la pédale d'accélération en position butée ou de point dur à condition que :
— la pédale soit en position de butée, c'est-à-dire $C_0 > 60$ % de la course de la pédale ;
— la vitesse du véhicule $V_2$ soit supérieure à 50 km/h ;
— la vitesse du véhicule $V_2$ soit également supérieure à une certaine valeur, fonction de la vitesse de butée $V_B$ :

$$V_2 > 0,75 \, V_B - 10$$

Il y a déblocage si l'on actionne le frein ou le débrayage pour une boîte de vitesses mécanique ou automatiquement si l'une des trois conditions ci-dessus n'est plus remplie, ce qui constitue une sécurité supplémentaire au cas où l'interrupteur de frein 56 ne fonctionnerait plus.

En ce qui concerne l'affichage de la vitesse de butée à l'aide des diodes 58, si l'on vient à allumer les lanternes, le calculateur 110 modifie le rapport cyclique de commande des diodes pour en diminuer l'intensité lumineuse. Dans le cas du blocage, la vitesse affichée est la vitesse du véhicule à ± 5 km/h.

Si, à la suite d'une accélération ou d'une décélération, la vitesse de butée et de régulation, car on se trouve en situation de blocage, est de 87 km/h, la diode électroluminescente 90 est activée. Cette dernière correspond à la plage 86 km/h $\rightleftharpoons$ 95 km/h. A la suite d'un déblocage, la vitesse de butée est recalée sur la vitesse correspondant à la diode électroluminescente activée, c'est-à-dire 90 km/h dans l'exemple présent.

La mesure de la vitesse du véhicule est faite avec une précision supérieure au km/h. Les calculs sont faits au km près. Le micro-calculateur 110 fait sa mesure toutes les 665 ms, sur un nombre entier de tours du câble tachymétrique en sortie de boîte. Cette mesure ne peut durer plus de 400 ms. Après mesure de la vitesse réelle $V_2$ du véhicule, le calculateur 110 calcule la vitesse de régulation $V_0$, fonction de la position de la pédale suivant la représentation de la figure 9, puis calcule la grandeur X conformément à l'équation (1) ci-dessus.

A chaque valeur X de la grandeur calculée, on fait correspondre un temps de commande du moteur électrique 30 qui est fonction d'une loi d'ouverture mise en mémoire dans le calculateur. Il y a huit pas de commande positifs et huit pas de commande négatifs suivant un mode de réalisation particulier, ce qui permet d'obtenir, au niveau du carburateur, le demi-degré d'ouverture pour le pas le plus fin et la pleine ouverture en 0,7 s, en supposant le moteur alimenté en continu. A la fin de chaque commande, une impulsion inverse est envoyée par le calculateur 110 pour freiner le moteur.

Il n'y a pas de fins de course dans le bloc de régulation. Pour les remplacer électroniquement, si la grandeur X est supérieure ou égale à 8 en valeur absolue, on donne deux commandes au huitième pas, puis on force six coups au quatrième pas et $n$ coups au troisième pas tant que $|X| \geqslant 8$.

A chaque fois que l'on commande une sélection de vitesse en montée ou descente ou une accélération ou une décélération, on force le moteur soit pour ouvrir, soit pour fermer le papillon des gaz pendant un temps donné de façon à réagir immédiatement et à anticiper la commande fournie par le calculateur avec la nouvelle consigne.

A l'extérieur du calculateur 110, s'il se produit une fermeture du contact de « brin mou » 49, le moteur 30 est commandé indépendamment de toute autre commande pour rattraper immédiatement la position de la pédale d'accélérateur. C'est le cas d'un relèvement de pied par exemple. En cas de débrayage, la commande de brin mou est inhibée.

A la mise sous tension, il y a calage automatique de la vitesse de butée à la décade supérieure à la vitesse du véhicule si celui-ci roule à plus de 90 km/h ; sinon, il y a calage à 90 km/h.

Il y a recalage automatique du potentiomètre 39 si l'on est bloqué pédale en butée et que l'on accélère ou que l'on décélère manuellement au cas où la position $C_0$ de la pédale est différente de $C_2$. Dans ce cas :

— si l'on se trouve pédale bloquée en situation de vitesse stabilisée ($X = 0$), on met en mémoire $C_3$ valeur de $C_0$ correspondant à la position pédale en butée ;

— si l'on accélère ou si l'on décélère manuellement, on change la valeur $C_1$ initialement placée à 65 % en valeur $C_3$ ainsi que la valeur $C_2$ en $C_3 + 5$ %. Il y a donc recalibrage automatique sans intervention du conducteur.

Il va de soi que le dispositif de l'invention s'applique tout aussi bien à un moteur Diesel ou à un moteur à injection et, plus généralement, à tout moteur dont la puissance est contrôlée par un système mécanique. Il est possible d'utiliser le régulateur d'allure en association avec un circuit horloge alimenté en « plus batterie » soit interne au microcalculateur, soit externe du type MC 146818 de MOTOROLA servant de base de temps au microcalculateur et permettant, en utilisant un afficheur numérique, d'afficher soit l'heure, soit la vitesse de butée, soit la vitesse de consigne, soit la vitesse réelle ou encore la vitesse moyenne du véhicule sur un parcours.

Dans le préambule de la revendication principale ci-après, il y a lieu d'interpréter le terme « commande mécanique de la puissance du moteur » comme se rapportant aussi bien au type commande d'un papillon d'admission d'air associé à un carburateur ou à un système d'injection pour un moteur à essence qu'au type commande d'un injecteur de fuel pour un moteur Diesel.

### Revendications

1. Régulateur d'allure pouvant servir d'aide à la conduite pour un véhicule automobile à moteur à combustion interne, du type comportant des moyens de rappel enfonçables (24) pour s'opposer avec une force limitée et au moins égale à une valeur prédéterminée à l'effort d'enfoncement du conducteur agissant sur la pédale d'accélérateur (1) dès que cette dernière de par sa position dépasse une valeur prédéterminée, un capteur de vitesse (12), un calculateur électronique (110) associé à des moyens (16) de sélection d'une vitesse de consigne et à des moyens (15) d'affichage de ladite vitesse de consigne présélectionnée, un potentiomètre de recopie (39) dont la partie mobile est solidaire de la pédale d'accélérateur (1) et dont la sortie est reliée à un moteur électrique (30) qui commande les déplacements angulaires du papillon (14), dans lequel l'effort d'enfoncement de la pédale d'accélérateur (1) correspond à une première valeur sur une longueur déterminée de la course de la pédale d'accélérateur (1) et à une seconde valeur supérieure à la première sur le restant de la course de ladite pédale d'accélérateur (1) faisant apparaître un point dur fixe en un point déterminé de la course de la pédale d'accélérateur (1) correspondant au passage d'un premier effort d'enfoncement à un second effort d'enfoncement supérieur au premier, dans lequel les déplacements de la pédale d'accélérateur (1) sont gradués en vitesse, caractérisé en ce que, comme connu en soi, il comprend une liaison mécanique (2, 3, 10) entre ladite pédale d'accélérateur (1) et ledit papillon (14), ladite liaison mécanique incorporant un bloc de régulation (13) qui est commandé par le calculateur électronique (110) et regroupe un train épicycloïdal (35, 36, 37) commandé par le moteur électrique (30), le potentiomètre de recopie (39) et une palette (21) tourillonnant autour de l'axe de symétrie (41) dudit train épicycloïdal.

2. Régulateur d'allure suivant la revendication 1, caractérisé en ce que ledit bloc de régulation (13) comporte, en outre, un électro-aimant (23) de blocage de la pédale d'accélération dans la position correspondant au point dur.

3. Régulateur d'allure suivant la revendication 1, caractérisé en ce que ledit point dur correspond à une vitesse présélectionnée par le conducteur à partir de ses commandes de sélection (16) constituant une vitesse de butée ($V_B$).

4. Régulateur d'allure suivant l'une des revendications précédentes, caractérisé en ce que ledit bloc de régulation (13) comporte, en outre, un contacteur (49) détectant la présence d'un brin mou sur la partie du câble (3) de la liaison mécanique qui est raccordée au papillon des gaz (14) et permettant de garder toujours sous tension la liaison pédale d'accélération (1) — papillon des gaz (14).

5. Régulateur d'allure suivant la revendication 3, du type comportant une commande d'accélération manuelle et une commande de décélération manuelle, caractérisé en ce que dans le cas de blocage de la pédale d'accélération les commandes de présélection de vitesse (16) sont utilisées à la commande d'accélération manuelle et à la commande de décélération manuelle.

6. Régulateur d'allure suivant la revendication 3, caractérisé en ce que ledit point dur est suivi sur la course de la pédale d'accélération par une plage morte correspondant à environ 5 % de la course de ladite pédale.

7. Régulateur d'allure suivant la revendication 1, caractérisé en ce que le circuit électronique qui relie la sortie ($P_{12}$) du microcalculateur (110) à la bobine d'excitation (23) de l'électro-aimant de blocage est réalisé de telle manière que, si on débraye (55) ou si on freine (56), on force la tension sur ladite sortie ($P_{12}$) d'un niveau haut à un niveau bas, ce qui désexcite l'électro-aimant de blocage et cette information est reprise par ledit microcalculateur de l'intérieur si bien que sa sortie ($P_{12}$) retombe à zéro et qu'elle sert à la fois d'entrée et de sortie pour ledit microcalculateur (110).

8. Régulateur d'allure suivant la revendication 1, caractérisé en ce qu'à la fin de chaque train d'impulsions de commande dudit moteur électrique (30), fonction d'une loi d'ouverture du papillon des gaz (14) mise en mémoire dans le microcalculateur (110), ledit microcalculateur envoie une impulsion de polarité inverse en vue de freiner ledit moteur (30).

9. Régulateur d'allure suivant la revendication 4, caractérisé en ce que le circuit électronique de commande (86) du moteur (30) est connecté au détecteur de brin mou (49) de telle manière que, à l'extérieur dudit microcalculateur (110), si une fermeture de contact de brin mou (49) se produit, le moteur (30) est commandé instantanément et indépendamment de toute autre commande pour rattraper immédiatement la position de la pédale d'accélérateur (1) dans sa course.

10. Régulateur d'allure suivant la revendication 5, caractérisé par un recalibrage automatique dudit potentiomètre de recopie (39) dans le cas du blocage au moment d'une commande manuelle d'accélération ou de décélération.

11. Régulateur d'allure suivant la revendication 5, caractérisé par un recalage automatique de la vitesse de butée (VB) à la vitesse affichée au moment du déblocage.

12. Régulateur d'allure suivant la revendication 1, caractérisé en ce que, à la mise en route dudit calculateur (11, 110), il s'effectue une sélection automatique par ledit calculateur de la vitesse de butée (VB) qui est fonction de la vitesse réelle du véhicule comme suit : entre zéro et une vitesse prédéterminée dans le calculateur, il y a affichage de cette vitesse prédéterminée, au-delà de cette valeur prédéterminée, il y a affichage de la vitesse correspondant à la décade immédiatement supérieure à la vitesse réelle du véhicule.

**Claims**

1. A speed controller which can serve as a driving aid for an internal combustion engined motor vehicle, of the type comprising overridable return means (24) for resisting with a limited force at least equal to a predetermined value, the pressing force applied by the driver to the accelerator pedal (1), as soon as the latter, by virtue of its position, exceeds a predetermined value, a speed detector (12), an electronic computer (110) associated with means (16) for selecting a reference speed and means (15) for displaying said preselected reference speed, a repeater potentiometer (39), the movable part of which is fixed with respect to the accelerator pedal (1) and the output of which is connected to the electronic computer (110) whose outputs are connected to an electric motor (30) which controls the angular movements of the butterfly valve (14), wherein the force for depressing the accelerator pedal (1) corresponds to a first value over a predetermined length in respect of the travel of the accelerator pedal (1) and to a second value which is higher than the first value over the remainder of the travel of the accelerator pedal (1) producing a fixed hard point at a given point in the travel of the accelerator pedal (1) corresponding to the transfer from a first pedal depression force to a second pedal depression force which is higher than the first force, wherein the movements of the accelerator pedal (1) are graduated in respect of speed, characterised in that, as is known per se, it comprises a mechanical connection (2, 3, 10) between said accelerator pedal (1) and said butterfly valve (14), said mechanical connection incorporating a regulating unit (13) which is controlled by the electronic computer (110) and which combines an epicyclic train (35, 36, 37) controlled by the electric motor (30), the potentiometer (39) and a vane member (21) which is journalled about the axis of symmetry (41) of said epicyclic train.

2. A controller according to claim 1 characterised in that said regulating unit (13) further comprises a solenoid (23) for blocking the accelerator pedal in the position corresponding to the hard point.

3. A controller according to claim 1 characterised in that said hard point corresponds to a speed preselected by the driver from his selection controls (16) constituting a set speed ($V_B$).

4. A controller according to one of the preceding claims characterised in that said regulating unit (13) further comprises a contact-making means (49) for detecting the presence of a slack run on the portion of the cable (3) of the mechanical connection, which is connected to the butterfly valve (14), and for permitting the connection between the accelerator pedal (1) and the butterfly valve (14) always to be maintained under tension.

5. A controller according to claim 3 of the type comprising a manual acceleration control and a manual deceleration control characterised in that, when the accelerator pedal is blocked, the speed preselection controls (16) are used for the manual acceleration control and the manual deceleration control.

6. A controller according to claim 3 characterised in that said hard point is followed in the travel of the accelerator pedal by a dead region corresponding to about 5 % of the travel of said pedal.

7. A controller according to claim 1 characterised in that the electronic circuit which connects the output ($P_{12}$) of the microcomputer (110) to the energisation coil (23) of the blocking solenoid is so designed that, if the driver declutches (55) or brakes (56), the voltage at said output ($P_{12}$) is forced from a high level to a low level, which deenergises said solenoid and said information is picked up again by said microcomputer from the interior so that its output ($P_{12}$) falls to zero again and it serves both as an input and as an output for said microcomputer (110).

8. A controller according to claim 1 characterised in that, at the end of each train of control pulses for said eldctric motor (30), in dependence on a law in respect of opening of the butterfly valve (14) stored in the microcomputer (110), said microcomputer supplies a pulse of opposite polarity for braking said motor (30).

9. A controller according to claim 4 characterised in that the electronic control circuit (86) of the motor (30) is connected to the slack run detector (49) in such a way that, outside said microcomputer (110), if the slack run contact-making means (49) closes, the motor (30) is actuated instantly and independently of any other control to immediately catch up the position of the accelerator pedal (1) in its travel movement.

10. A controller according to claim 5 characterised by automatic recalibration of said potentiometer (39) in the case of blocking at the moment of a manual acceleration or deceleration command.

11. A controller according to claim 5 characterised by automatic resetting of said set speed ($V_B$) to the speed displayed at the moment of unblocking.

12. A controller according to claim 1 characterized in that, when said computer (11, 110) is set in operation, automatic selection is effected by said computer in respect of the set speed ($V_B$), which is dependent on the actual speed of the vehicle, as follows : between zero and a predetermined speed in the computer, there is display of said predetermined speed, and above said predetermined speed, there is a display of the speed corresponding to the decade immediately above the actual speed of the vehicle.

## Ansprüche

1. Geschwindigkeitsregelanlage für Fahrzeuge zur Unterstützung des Führers eines Kraftfahrzeuges mit Verbrennungsmotor, die eine eindrückbare Rückstellanordnung (24) aufweist, welche mit begrenzter Kraft, die wenigstens einem vorgegebenen Wert entspricht, der Druckkraft entgegenwirkt, mit der der Fahrer auf das Gaspedal (1) einwirkt, sowie letzteres eine Stellung erreicht, die einem vorgegebenen Wert entspricht, die einen Geschwindigkeitsfühler (12) aufweist, sowie einen elektronischen Rechner (110), der mit Mitteln (16) zur Auswahl einer vorgegebenen Geschwindigkeit und mit Mitteln (15) zur Anzeige dieser ausgewählten, vorgegebenen Geschwindigkeit verbunden ist, die ein Nachlaufpotentiometer (39) aufweist, dessen beweglicher Teil mit dem Gaspedal (1) verbunden ist und dessen Ausgang mit dem elektronischen Rechner (110) verbunden ist, dessen Ausgänge mit einem Elektromotor (30) verbunden sind, der die Winkelstellungen der Drosselklappe (14) steuert, die wiederum aufgrund des Niederdrückens des Gaspedals (1) einem ersten Wert entsprechen, gemäß einer bestimmten Länge des Weges des Gaspedals (1) und einem zweiten Wert entsprechen, der größer als der erste Wert ist, gemäß dem restlichen Weg des Gaspedals (1), wobei ein feststehender harter Punkt an einer bestimmten Stelle des Gaspedalweges vorhanden ist, die den Übergang von der ersten Druckkraft zur zweiten, größeren Druckkraft entspricht und an dem die Bewegungen des Gaspedals (1) in Geschwindigkeiten unterteilt sind, dadurch gekennzeichnet, daß in an sich bekannter Weise eine mechanische Verbindung (2, 3, 10) zwischen dem Gaspedal (1) und der Drosselklappe (14) vorhanden ist, wobei die mechanische Verbindung einen Reglerkreis (13) aufweist, der vom elektronischen Rechner (110) gesteuert wird, und eine Epizykloid-Anordnung (35, 36, 37) aufweist, die vom Elektromotor (30), dem Nachlaufpotentiometer (39) und einer Platte (21) gesteuert wird, wobei letztere um die Symmetrieachse (41) der Epizykloid-Anordnung rotiert.

2. Geschwindigkeitsregelanlage nach Anspruch 1, dadurch gekennzeichnet, daß der Reglerkreis (13) außerdem einen Elektromagneten (23) zur Blockierung des Gaspedals in der dem harten Punkt entsprechenden Stellung aufweist.

3. Geschwindigkeitsregelanlage nach Anspruch 1, dadurch gekennzeichnet, daß der harte Punkt einer vom Fahrer vorgewählten Geschwindigkeit entspricht, ausgehend von seinen Auswahlbefehlen (16), die eine Anschlagsgeschwindigkeit ($V_R$) bilden.

4. Geschwindigkeitsregelanlage nach einem der vorhergehenden Ansprüche, dadurch gekennzeichnet, daß der Regelkreis (13) außerdem einen Kontaktgeber (49) aufweist, der die Anwesenheit eines durchhängenden Teils des Kabels (3) der mechanischen Verbindung feststellt, die mit der Drosselklappe (14) verbunden ist um so ständig eine Spannung der Verbindung zwischen dem Gaspedal (1) und der Drosselklappe (14) zu ermöglichen.

5. Geschwindigkeitsregelanlage nach Anspruch 3, die eine manuelle Beschleunigungssteuerung aufweist und eine manuelle Bremssteuerung aufweist, dadurch gekennzeichnet, daß im Fall einer Blockierung des Gaspedals die Steuerungen für die Auswahl der Geschwindigkeit (16) für die manuelle Beschleunigungssteuerung und die manuelle Bremssteuerung verwendet werden.

6. Geschwindigkeitsregelanlage nach Anspruch 3, dadurch gekennzeichnet, daß dem harten Punkt entlang des Weges des Gaspedals ein unwirksamer Bereich folgt, der ungefähr 5 % des Gaspedalweges entspricht.

7. Geschwindigkeitsregelanlage nach Anspruch 1, dadurch gekennzeichnet, daß der elektronische Kreis, der den Ausgang ($P_{12}$) des Mikrorechners (110) mit der Anregungsspule (23) des der Blockierung dienenden Elektromagneten verbindet, derart ausgestaltet ist, daß beim Anskuppeln (55) oder beim Bremsen (56) die Spannung an diesem Ausgang ($P_{12}$) von einem hohen Pegel auf einen niedrigen Pegel fällt, wodurch der der Blockierung dienende Elektromagnet abgeschaltet wird, wobei diese Information vom Mikrorechner derart aufgenommen wird, daß dessen Ausgang ($P_{12}$) auf Null fällt und daß er gleichzeitig als Eingang und als Ausgang für den Mikrorechner (110) dient.

8. Geschwindigkeitsregelanlage nach Anspruch 1, dadurch gekennzeichnet, daß am Ende eines jeden Impulszuges zur Steuerung des Elektromotors (30) als Funktion eines Öffnungsgesetzes für die Drosselklappe (40), das im Mikrorechner (110) gespeichert wird, der Mikrorechner einen Impuls entgegengetsetzter Polarität aussendet um den Motor (30) zu bremsen.

9. Geschwindigkeitsregelanlage nach Anspruch 4, dadurch gekennzeichnet, daß der elektronische Steuerkreis (86) des Motors (30) mit dem Kontaktgeber (49) für die Durchbiegung derart verbunden ist, daß außerhalb des Mikrorechners (110), sofern eine Kontaktgebung der Durchbiegung (49), auftritt, der Motor (30) sofort und unabhängig von jeder anderen Steuerung angesteuert wird um unverzüglich die Stellung des Gaspedals (1) nachzustellen.

10. Geschwindigkeitsregelanlage nach Anspruch 5, dadurch gekennzeichnet, daß eine automatische Nachstellung des Nachlaufpotentiometers (39) erfolgt, im Falle einer Blockierung zu dem Zeitpunkt einer manuellen Beschleunigungssteuerung oder einer Verzögerung.

11. Geschwindigkeitsregelanlage nach Anspruch 5, dadurch gekennzeichnet, daß eine automatische Einstellung der Anschlagsgeschwindigkeit ($V_B$) auf die angezeigte Geschwindigkeit erfolgt im Zeitpunkt der Lösung der Blockierung.

12. Geschwindigkeitsregelanlage nach Anspruch 1, dadurch gekennzeichnet, daß beim Einschalten des Rechners (11, 110) eine automatische Auswahl der Anschlagsgeschwindigkeit ($V_B$) durch den Rechner erfolgt und zwar als Funktion der tatsächlichen 0 und einer vorgegebenen Geschwindigkeit im Rechner wird diese vorgegebene Geschwindigkeit angezeigt, während jenseits dieses vorgegebenen Wertes diejenige Geschwindigkeit angezeigt wird, die dem unmittelbar folgenden größeren Bereich der tatsächlichen Fahrzeuggeschwindigkeit entspricht.

FIG_1

FIG_9

0 021 935

**0 021 935**

FIG. 2

FIG. 4

FIG. 6

**0 021 935**

FIG_3

FIG_5

0 021 935

FIG_7

FIG_8

0 021 935